# EUROPEAN PATENT SPECIFICATION

(11) **EP 2 885 967 B1**
(45) Date of publication and mention of the grant of the patent: **23.12.2020**
(21) Application number: 14194533.7
(22) Date of filing: 24.11.2014
(51) Int. Cl.: A01M 25/00

(54) **Liquid rodenticide dispensing device**
Vorrichtung zur Ausgabe von flüssigem Rodentizid
Dispositif de distribution de rodenticide liquide

(30) Priority: 23.12.2013 ES 201331896
(43) Date of publication of application: 24.06.2015
(73) Proprietor: Will-Kill, S.A., 07011 Palma de Mallorca (ES)
(72) Inventor: Labadie Regnier, Juan Luis, 07011 Palma de Mallorca (ES)
(74) Representative: Ponti & Partners, S.L.P

(56) References cited:
- CA-A1- 2 059 895
- DE-T2- 60 302 043
- US-A- 4 840 143
- US-A- 5 038 516
- US-A1- 2006 191 189
- US-B1- 6 671 999

## Description

### Object of the Invention.

More specifically the invention is a device for dispensing liquid rodenticides, specially designed to offer users a high degree of safety, preventing its misuse and consequently poisoning of the person handling, careless access or access of species not subject to control.

### State of the Art.

The types and models of solid and liquid rodenticide dispensing devices are many and varied, most of which, regardless of their result, are designed for use in areas with little transit of people and therefore, being placed in warehouses, garages and the like, lack safety measures to ensure that their content, a liquid rodenticide for example, is protected and not ingested by animals other than rodents, such as cats, dogs and less frequently children.

US5038516A discloses a rodent poison dispenser is constructed of a housing preferably having a pair of openings spaced from each other at the bottom of the housing and providing a pathway for a rodent between said openings. Along said pathway and easily accessible therefrom by a rodent is a first feeding trough for a dry poison food and a separate second feeding trough for a liquid poison. Means are provided to dispense into each trough and to maintain at an attractive level for rodent feeding, the type of poison substance carried in the trough. The housing may be secured to a structure on the ground and locked to prevent undesired access or tampering.

The number of animals that are seen daily by veterinarians as a result of the lack of safety of rodenticide dispensing devices indicates that their use is not protected and their safety measures are inadequate.

Another drawback of such dispensers is the renewal of liquid and/or solid rodenticide, as most are available in bulk, and in parallel the ingestion of such liquids and solids is uncontrolled as it result from the presence or absence thereof in a conventional feeder, whereby there is no impediment to the rodent or to other animals.

### Scope of the Invention.

The new dispenser is necessarily contained inside a bait box specially designed to allow only rodents to enter, and which can only be opened by a key meaning that only authorized personnel have access to the dispenser/recipient (bottle) assembly.

The recipient will be appropriately designed to allow the instalment of the dispenser/recipient assembly in most bait boxes on the market.

One purpose of the invention is to improve the safety of rodenticide treatments based on liquid products by limiting the access to the product to rodents only.

Another purpose is to establish an effective pattern of treatment against rats and mice that does not involve any handling of the rodenticide product.

The invention is defined by the features of claim 1.

### Description of the Invention.

The preconized dispenser comprises a dispenser base or body on to which other items are snapped into place, such as:
- A supporting element including a rodenticide drip dispenser activated at the will of the rodent.
- A recipient that fits with the above part and in which the rodenticide is stored.
- A base whose purpose is to support the assembly and collect any spills.

The base of the dispenser can be manufactured, among others, by extrusion molding of plastic materials, and is configured as a warped generatrix revolution body, whose upper section is substantially cylindrical, and the body of the base rests on the floor through a set of radial foot mode extensions which give the device great stability in contact with the inside floor of the feedlot housing extensions, and a receptacle which emerges radially from the body of said base is defining a cavity for the container from the rodenticide dispenser tube.

For easy assembly of the various parts of the dispensing device the side surface of the body of the base has an open slit for fitting the element that supports the means for dispensing the liquid rodenticide; for example, but not necessarily, a metal tube. The means of dispensing will come fitted from the factory. This supporting element also snaps on to a recipient to hold the liquid rodenticide.

The dispensing component, fitted to the supporting element in the factory, slopes downward - more specifically toward the receptacle. A possible dispensing component would be a metal tube with two ball bearings inside to prevent the liquid in the recipient flowing into the receptacle without the rodent first pressing its snout against one of the ball bearings to allow a few drops of liquid to flow.

Two ball bearings are required because with the shallow slope of the tube that can be achieved means that the weight of a single ball bearing would not be sufficient to completely seal in the liquid.

The assembly of the various parts of the dispenser is achieved by means of attachment such as projections on the inner surface of the top of the neck of the base and projections on the inner surface of the part containing the tube.

The recipient containing the liquid is made of translucent material, making it possible to see if there is still product in the recipient, and has a safety cap and an induction welded plastic seal in the neck. As soon as the product runs out, the dispenser-recipient assembly is removed and disposed of as waste in accordance with current regulations.

During the dispensing process the rodents allow a few drops of product to escape; the function of the receptacle is to prevent the product reaching the floor of the bait box. In order to prevent the spillage of product, the bait box is mounted securely to the floor horizontally.

The set volumes of the recipient are 100cc for domestic use and 250 cc for professional use. These volumes allow both professionals and non-professionals to apply the treatments correctly without having to manipulate the baiting points until the treatment is completed. Thus, unlike other conventional dispensers, the need for direct handling of the rodenticide is avoided, and the successful application of the treatments is ensured.

Other details and characteristics shall be shown throughout the description below referring to drawings attached to this report which are shown for illustrative but not limiting purposes only in a drawing of the invention.

### Description of the drawings.

Below is a list of the different parts of the invention, which are indicated in the drawings with their respective numbers; (10) dispensing device, (11) upper receptacle, (12) base plate, (13a-13b) tubes, (14) lower receptacle, (15) feet, (17) projections, (18) flap, (19) bottom, (20) mouth, (21) cavity, (22) pawl, (23) base, (24) mouth, (25) open slit, (26) base, (27) steps, (28) cylindrical section, (29) hole, (30) balls, (31) abutment flanges, (32) projection, (33) groove, (34) cut-off points.
Figure 1 is a perspective view of the dispensing device (10) showing the main parts thereof, such as the upper receptacle (11) for depositing the liquid rodenticide contained in a cartridge (which is not drawn) but whose mouth (20) is fitted into the neck of the upper receptacle (11) and the base plate (12) from which the tubes (13a-13b) emerge, all the above (11 and 12) being snapped on to the base (23), from which emerge feet (15) and an extension that extends outwardly as a lower receptacle (14), inside which is the cavity (21).
Figure 2 is a top plan view of the dispensing device (10), where you can see the base plate (12), which fits into the mouth (24) of the base (23).

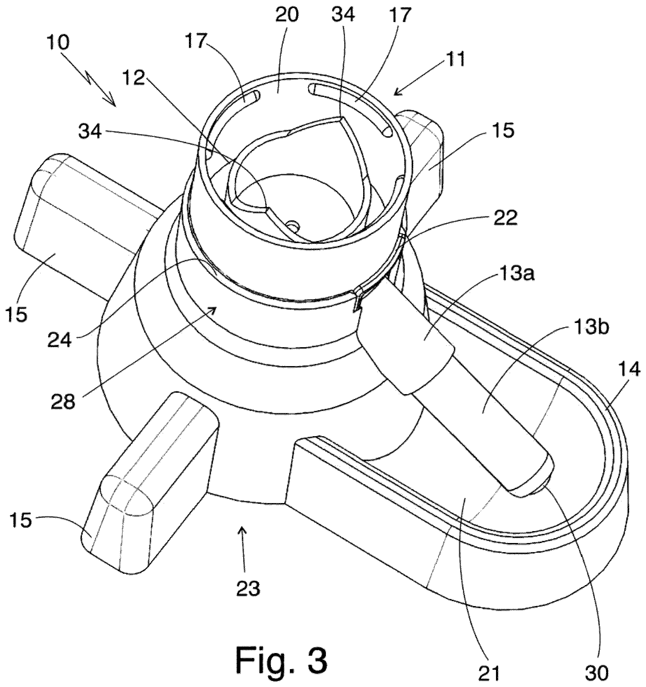

Figure 3 is a perspective view of the dispensing device (10) similar to that of Figure 1, but from a different viewpoint showing the flap (18) emerging perpendicularly from the bottom (19), with the cut-off points (34).

### Description of an embodiment of the invention.

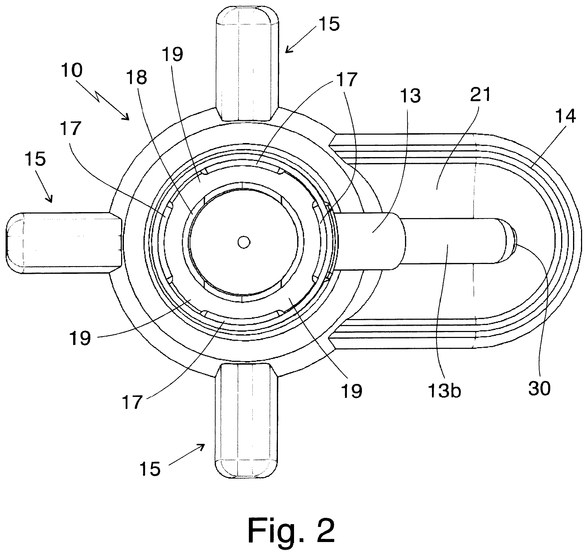

In one of the preferred embodiments of the invention and as can be seen in Figure 2, the dispensing device (10) comprises a base (23), from whose periphery emerge radially some feet (15) and a lower receptacle (14) defining a cavity (21), and finally a second upper receptacle (11) inserted into the base plate (12), which in turn the base plate (12) is fitted into the base (23) of the dispensing device (10).

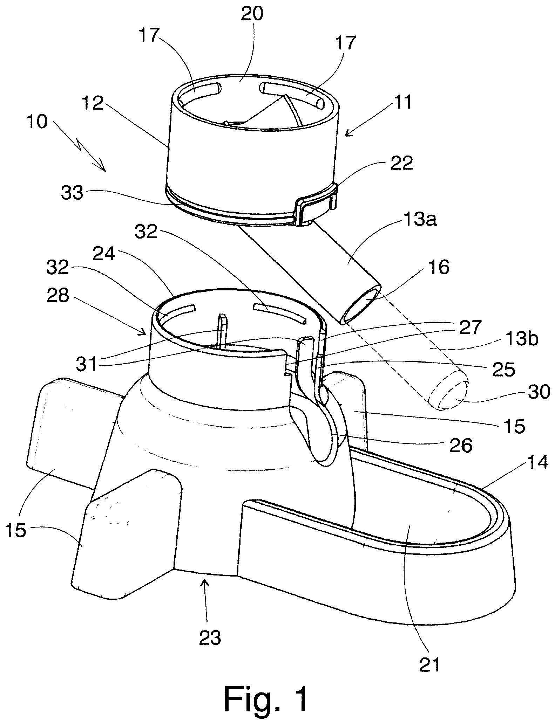

In turn, the base (23) is a body of revolution, in which there is an upper mouth (24), see Figure 1, and an open slit (25) on the cylindrical section (28) with a round shaped lower base (26), as can be seen in Figure 1, and on the upper section of the slit (25) are provided same steps (27) and, a cylindrical section (28) on the upper part of the base (23), designed to receive the base plate (12) and the upper receptacle (11).

The inside of the neck of the base (23) has a flange (31) as a lid when the upper receptacle (11) is inserted and in the lower part of its lateral surface this has some grooves (33) into which the projections (32) fit, as shown in Figure 1.

The upper receptacle (11) is a tubular body, into whose bottom (19) and base plate (12) the rodent-operated drip dispenser comes fitted from the factory, some tubes (13a-13b) being shown as an example. The recipient containing the liquid rodenticide, not shown in the figures, in the form of a cartridge, sealed by a plastic seal, so that even if the safety cap of the cartridge is removed, the rodenticide product does not flow until it breaks the seal with the help of some cut-off points (34).

By joining the recipient to the base plate (12) the plastic seal is perforated with the help of the flap (18) with its cut-off points (34) that emerge perpendicularly from the bottom (19), the rodenticide product passing through the drip dispenser, some tubes (13a-13b) being shown as an example. The tubes (13a-13b) drain the rodenticide from the recipient installed on the supporting element (12), the tube (13b) being sealed by metal balls (30) on the inside, the rodent dispensing the product by touching the balls (30) with its snout.

The base plate (12) of the receptacle (11) is inserted into the slit (25) by a pawl (22) provided in the base (23), with the aid of steps (27) projected on (25), see Figure 1, at the same way as the tube (13a) comes into contact with the base (26) of said slit (25).

The recipient, which can be bottle-shaped or similar, has a safety cap not shown in the figures, so that it only opens if a certain force is applied, and in a certain direction.

The handling of the dispensing device (10) begins when the user removes the safety cap from the recipient, not shown in the figures, this operation being impossible for children requiring certain strength and ability, and subsequently fits the recipient to the base plate (12) and breaks the seal of the recipient (bottle) not shown in the figures with the aid of the aforementioned cut-off points (34).

At all times, the recipient (bottle) with the rodenticide is kept upright and with the neck upwards to receive the base plate (12) and, once fitted, place the assembly in the cylindrical part (28) an upright position until a "click" is heard telling the user that the three parts (23), (12) and recipient are attached and cannot be separated.

At this time the dispenser (10) will be turned round, allowing the liquid to enter the dispensing element drop by drop, the tubes (13a-13b) that are sealed, (13b) with the aid of metal balls (30) in the inside of (13b) being shown as an example, allowing drops of the liquid stored inside the recipient to fall through the hole (29) which is present in the bottom (19); these drops being necessary to attract rodents, the tube (13b) then being sealed due to the action of the balls not shown in the figures.

The product contained in the recipient concerned has anticoagulant effects, allowing repeated ingestion by rodents without them associating it with the lethal situation they are in.

The three-piece assembly:
- The recipient (bottle) for containing a liquid rodenticide product to be used against all rodents.
- Base plate (12) carrying a drip dispenser, for example tubes (13a-13b) sealable by two metal balls (30) on the inside (13b).
- Lower receptacle (14) with feet (15).

The dosing device shown with the example of drip dispenser is incomparable with others on the market and allows dispensing of the liquid in the receptacle (11) and the cartridge concerned, only if the animal touches the metal balls (30) in the tube (13b), such that with a light touch thereof by the rodent a small amount of liquid is dispensed, falling into the lower receptacle (14) and its cavity (21).

Having sufficiently described this invention using the figures attached, it is easy to understand that any modification may be made to the detail which may be deemed to be appropriate, whenever these changes do not alter the scope of the invention summarised in the following claims.

## Claims

1. Liquid rodenticide dispensing device (10) configured for supplying a liquid rodenticide product through a rodenticide drip dispenser (13a, 13b) activable at the will of a rodent, and configured for being contained inside a bait box specially designed to allow only rodents to enter, said device (10) comprising:
- a base (23), being a single piece, comprising:
- supporting feet (15),
- a lower receptacle (14) forming part of the supporting feet (15) and
- an upper section (28) having attachment means at the top of the base (23),
said device (10) further comprising:
- an upper receptacle (11) fitted to a circular support (12) comprising the rodenticide drip dispenser (13a, 13b),
wherein the upper receptacle (11) fits inside of the attachment means at the top of the base (23) via the support (12),
wherein the upper receptacle (11) has a mouth (20) configured to receive on the top, in use, a bottle or recipient cartridge containing the liquid rodenticide, and
wherein the upper receptacle (11) has a flap (18) with cut-off points (34) for perforating the bottle or recipient cartridge.

2. Liquid rodenticide dispensing device (10) according to claim 1, **characterised in that** the base (23) is a revolution body, whose upper section (28) of the base is substantially cylindrical, and on side surface of the upper section (28) and on the base (23) are provided an open slit (25) wherein a base plate (12) forming the circular support is fitted forming a single unit with the upper receptacle (11).

3. Liquid rodenticide dispensing device (10) according to the previous claim, **characterised in that** the open slit (25) has a round shaped lower base (26).

4. Liquid rodenticide dispensing device (10) according to any one of the preceding claims, **characterised in that** on the inner surface of the top of the upper section (28) of the base (23) are located in the vicinity of the mouth (24) various projections (32) are provided for fitting into some grooves (33) provided in the lower part of the lateral surface of the upper receptacle (11) for snapping on a the circular support (12) with the rodenticide dispenser.

5. Liquid rodenticide dispensing device (10) according to claim 2, **characterised in that** the base plate (12) is inserted into the open slit (25) by a pawl (22) provided in the base (23), with the aid of steps (27) projected on the open slit (25).

6. Liquid rodenticide dispensing device (10) according to claim 1, **characterised in that** the cut-off points (34) of the flap (18) emerge perpendicularly from the bottom (19) of the upper receptacle (11).

7. Liquid rodenticide dispensing device (10) according to claim 1, **characterised in that** the inside of the upper section (28) of the base (23) has a flange (31) as a lid when the upper receptacle (11) is inserted and the lower part of its lateral surface this has some grooves (33) into which the projections (32) fit.

8. Liquid rodenticide dispensing device (10) according to claim 1, **characterised in that** the drip dispenser (13a, 13b) is as a tube in which the rodenticide product passes through, and the tube is sealed by metal balls (30) on the inside, whereby by a light touch of the balls (30) by the rodent's snout causes the liquid to be dispensed.

9. Liquid rodenticide dispensing device (10) according to the previous claim, **characterised in that** the drip dispenser (13a, 13b) is sealed by two metal balls (30) on the inside.

10. Liquid rodenticide dispensing device (10) according to claim 8 or 9, **characterised in that** the lower receptacle (14) defines a cavity (21) for receiving the few drops of liquid rodenticide from the drip dispenser (13a, 13b).

## Patentansprüche

1. Ausgabevorrichtung (10) für flüssiges Rodentizid, die konfiguriert ist, ein flüssiges Rodentizidprodukt durch einen Rodentizid-Tropfenspender (13a, 13b) zu liefern, der nach Belieben von einem Nager betätigt werden kann, und der so konfiguriert ist, dass er im Inneren einer Köderbox enthalten ist, die speziell so entworfen ist, dass nur Nager eindringen können, wobei die Vorrichtung (10) umfasst:
- eine Basis (23), die einteilig ist, umfassend:
- Tragfüße (15),
- einen unteren Behälter (14), der einen Teil der Tragfüße (15) bildet, und
- ein oberes Teilstück (28), das an der Oberseite der Basis (23) Befestigungsmittel aufweist,
wobei die Vorrichtung (10) ferner umfasst:
- einen oberen Behälter (11), der auf einer kreisförmigen Halterung (12) sitzt, die den Rodentizid-Tropfenspender (13a, 13b) umfasst,
wobei der obere Behälter (11) mittels der Halterung (12) in die Befestigungsmittel an der Oberseite der Basis (23) eingesetzt wird,
wobei der obere Behälter (11) eine Öffnung (20) aufweist, die konfiguriert ist, im Einsatz an der Oberseite eine Flasche oder einen Kartuschenbehälter, der das flüssige Rodentizid enthält, aufzunehmen, und
wobei der obere Behälter (11) einen Vorsprung (18) mit ausgeschnittenen Spitzen (34) zum Perforieren der Flasche oder des Kartuschenbehälters aufweist.

2. Ausgabevorrichtung (10) für flüssiges Rodentizid nach Anspruch 1, **dadurch gekennzeichnet, dass** die Basis (23) ein Drehkörper ist, wobei das obere Teilstück (28) der Basis im Wesentlichen zylindrisch ist und wobei an einer seitlichen Oberfläche des oberen Teilstücks (28) und an der Basis (23) ein offener Schlitz (25) vorgesehen ist, in den eine Basisplatte (12), die die kreisförmige Halterung bildet, eingesetzt ist, um mit dem oberen Behälter (11) eine einzige Einheit zu bilden.

3. Ausgabevorrichtung (10) für flüssiges Rodentizid nach dem vorhergehenden Anspruch, **dadurch gekennzeichnet, dass** der offene Schlitz (25) eine untere Basis (26) mit runder Form aufweist.

4. Ausgabevorrichtung (10) für flüssiges Rodentizid nach einem der vorhergehenden Ansprüche, **dadurch gekennzeichnet, dass** an der inneren Oberfläche der Oberseite des oberen Teilstücks (28) der Basis (23) in der Nähe der Öffnung (24) verschiedene Vorsprünge (32) angeordnet sind, die so vorgesehen sind, dass sie in einige Rillen (33) eingesetzt werden, die in dem unteren Teil der seitlichen Oberfläche des oberen Behälters (11) vorgesehen sind, so dass sie bei der kreisförmigen Halterung (12) mit dem Rodentizidspender einrasten.

5. Ausgabevorrichtung (10) für flüssiges Rodentizid nach Anspruch 2, **dadurch gekennzeichnet, dass** die Basisplatte (12) mit Hilfe von Stufen (27), die bei dem offenen Schlitz (25) vorstehen, mittels eines Einrastelements (22), das in der Basis (23) vorgesehen ist, in den offenen Schlitz (25) eingesetzt wird.

6. Ausgabevorrichtung (10) für flüssiges Rodentizid nach Anspruch 1, **dadurch gekennzeichnet, dass** die ausgeschnittenen Spitzen (34) des Vorsprungs (18) von dem Boden (19) des oberen Behälters (11) senkrecht vorstehen.

7. Ausgabevorrichtung (10) für flüssiges Rodentizid nach Anspruch 1, **dadurch gekennzeichnet, dass** die Innenseite des oberen Teilstücks (28) der Basis (23) einen hervorspringenden Rand (31) als Klappe aufweist, wenn der obere Behälter (11) eingesetzt ist, und wobei der untere Teil seiner seitlichen Oberfläche einige Rillen (33) aufweist, in die die Vorsprünge (32) eingesetzt werden.

8. Ausgabevorrichtung (10) für flüssiges Rodentizid nach Anspruch 1, **dadurch gekennzeichnet, dass** der Tropfenspender (13a, 13b) als ein Röhrchen ausgebildet ist, durch das das Rodentizidprodukt hindurchläuft, und wobei das Röhrchen an der Innenseite durch Metallkugeln (30) abgedichtet ist, wobei eine leichte Berührung der Kugeln (30) durch die Schnauze des Nagers bewirkt, dass die Flüssigkeit freigegeben wird.

9. Ausgabevorrichtung (10) für flüssiges Rodentizid nach dem vorhergehenden Anspruch, **dadurch gekennzeichnet, dass** der Tropfenspender (13a, 13b) an der Innenseite durch zwei Metallkugeln (30) abgedichtet ist.

10. Ausgabevorrichtung (10) für flüssiges Rodentizid nach Anspruch 8 oder 9, **dadurch gekennzeichnet, dass** der untere Behälter (14) einen Hohlraum (21) zum Aufnehmen der wenigen Tropfen des flüssigen Rodentizids aus dem Tropfenspender (13a, 13b) definiert.

## Revendications

1. Dispositif de distribution de rodenticide liquide (10) configuré pour fournir un produit rodenticide liquide par l'intermédiaire d'un distributeur de gouttes de rodenticide (13a, 13b) pouvant être activé à la guise d'un rongeur, et configuré pour être contenu à l'intérieur d'une boîte d'appât conçue particulièrement pour permettre aux seuls rongeurs d'y pénétrer, ledit dispositif (10) comprenant :
- une base (23), d'une seule pièce, comprenant :
• des pieds de support (15),
• un récipient inférieur (14) formant une partie des pieds de support (15), et
• une section supérieure (28) présentant des moyens de fixation en haut de la base (23),
ledit dispositif (10) comprenant en outre :
- un récipient supérieur (11) ajusté sur un support circulaire (12) comprenant le distributeur de gouttes (13a, 13b) de rodenticide,
dans lequel le récipient supérieur (11) s'ajuste à l'intérieur des moyens de fixation en haut de la base (23) par l'intermédiaire du support (12),
dans lequel le récipient supérieur (11) présente une ouverture (20) configurée pour recevoir sur le dessus, en service, une bouteille ou une cartouche réceptrice qui contient le rodenticide liquide, et
dans lequel le récipient supérieur (11) présente un rabat (18) avec des pointes coupantes (34) destinées à perforer la bouteille ou la cartouche réceptrice.

2. Dispositif de distribution de rodenticide liquide (10) selon la revendication 1, **caractérisé en ce que** la base (23) est un corps de révolution, la section supérieure (28) de la base étant sensiblement cylindrique, et sur la surface latérale de la section supérieure (28) et sur la base (23), est prévue une fente ouverte (25) où est ajustée une plaque de base (12) qui forme le support circulaire, en formant une seule unité avec le récipient supérieur (11).

3. Dispositif de distribution de rodenticide liquide (10) selon la revendication précédente, **caractérisé en ce que** la fente ouverte (25) présente une base inférieure de forme arrondie (26).

4. Dispositif de distribution de rodenticide liquide (10) selon l'une quelconque des revendications précédentes, **caractérisé en ce que**, sur la surface interne du dessus de la section supérieure (28) de la base (23), se situent, à proximité de l'ouverture (24), diverse saillies (32) destinées à s'ajuster dans certaines rainures (33) ménagées dans la partie inférieure de la surface latérale du récipient supérieur (11) afin de clipper le support circulaire (12) au distributeur de rodenticide.

5. Dispositif de distribution de rodenticide liquide (10) selon la revendication 2, **caractérisé en ce que** la plaque de base (12) est insérée dans la fente ouverte (25) par un cliquet (22) ménagé dans la base (23), à l'aide de paliers (27) en saillie sur la fente ouverte (25).

6. Dispositif de distribution de rodenticide liquide (10) selon la revendication 1, **caractérisé en ce que** les pointes coupantes (34) du rabat (18) émergent perpendiculairement à partir du bas (19) du récipient supérieur (11).

7. Dispositif de distribution de rodenticide liquide (10) selon la revendication 1, **caractérisé en ce que** l'intérieur de la section supérieure (28) de la base (23) présente une bride (31) similaire à un couvercle lorsque le récipient supérieur (11) est inséré, et la partie inférieure de sa surface transversale présente certaine rainures (33) dans lesquelles s'ajustent les saillies (32).

8. Dispositif de distribution de rodenticide liquide (10) selon la revendication 1, **caractérisé en ce que** le distributeur de gouttes (13a, 13b) est similaire à un tube dans lequel passe le produit rodenticide, et le tube est scellé à l'intérieur par des billes métalliques (30), grâce à quoi, une touche légère du museau du rongeur sur les billes (30) provoque la distribution du liquide.

9. Dispositif de distribution de rodenticide liquide (10) selon la revendication précédente, **caractérisé en ce que** le distributeur de gouttes (13a, 13b) est obturé à l'intérieur par deux billes métalliques (30).

10. Dispositif de distribution de rodenticide liquide (10) selon la revendication 8 ou 9, **caractérisé en ce que** le récipient inférieur (14) définit une cavité (21) destinée à recevoir les quelques gouttes de rodenticide liquide en provenance du distributeur de gouttes (13a, 13b).
